# EUROPEAN PATENT APPLICATION

(11) **EP 1 317 144 A1**
(43) Date of publication of application: **04.06.2003**
(21) Application number: 01955643.0
(22) Date of filing: 09.08.2001
(51) Int. Cl.: H04N 7/18

(54) **IMAGE STORAGE SERVER, IMAGE STORAGE SYSTEM, AND REMOTE MONITOR SYSTEM**

(30) Priority: 11.08.2000 JP 2000245088
(71) Applicant: Sanyo Electric Co., Ltd., Moriguchi-shi, Osaka-fu 570-8677 (JP)
(72) Inventor: ITO, Tsurumi, Anpachi-gun, Gifu 503-0113 (JP); KUWAYAMA, Ryoichi, Katano-shi, Osaka 576-0014 (JP)
(74) Representative: Glawe. Delfs. Moll
(86) International application number: JP0106885
(87) International publication number: WO02015581

(57) **Abstract**

An image storage server includes a controller, and the controller accepts setting of a utilization condition of the image storage server from a user terminal connected to the Internet. A user data table stores the utilization condition of the user. The controller receives image information via an interface from an imaging device connected to the Internet on the basis of the utilization condition, and the image information is stored in an image storage. The controller provides to the user terminal the information stored in the image storage via the interface on the basis of the utilization condition. It is possible for the user who desires to utilize a remote monitoring system to construct the remote monitoring system simply by preparing a monitoring camera, connecting the camera to the Internet and registering the utilization condition to the image storage server.

## Description

### TECHNICAL FIELD

The present invention relates to an image storage server on the Internet and an image storage system and a remote monitoring system utilizing the image storage server, which allows, by connecting the image storage server to the Internet and by permitting access to the image storage server, a user to utilize the image storage server, store image information from an imaging device set at a remote place and reproduce the image information anywhere.

### PRIOR ART

In the conventional monitoring system, via a public line, a private network or a leased line, a camera is connected to an image recording apparatus (and others such as multiplexer, monitor for display and etc.) for recording image data, the image is recorded at a required rate/image quality.

In a conventional system, a user is required to prepare a camera and a recording apparatus, set them by himself or herself or a trader and perform maintenance (for example, in a case of utilizing a tape as a recording medium of the recording apparatus, it is required to regularly exchange a tape or the like).

Furthermore, even if a small-sized monitoring system is to be constructed, it is required to set the camera/ recording apparatus and perform a cable work, and therefore, a considerable initial investment is needed.

In addition, in a case that there are a plurality of monitoring places such as a store, an office and etc. and these places are separately located, there is a need to set recording apparatuses at respective places or to connect such the places via a network.

### SUMMARY OF THE INVENTION

Therefore, it is a primary object of the present invention to provide a novel image storage server connected to the Internet, and a novel remote monitoring system utilizing the image storage server.

It is another object of the present invention to provide a remote monitoring system capable of being constructed simply by preparing a monitoring camera by a user and connecting the camera to the Internet.

It is a further object of the present invention to provide a remote monitoring system capable of easily performing monitoring at a place where it is difficult to lay telephone lines and the like by connecting a monitoring camera to an image storage server from a cellar phone via the Internet.

It is another object of the present invention to provide a remote monitoring system capable of viewing a monitoring image anywhere by accessing an image storage server from a cellular phone and viewing an image of a monitoring camera.

It is a further object of the present invention to provide a remote monitoring system and its environment capable of easily constructing a remote monitoring system in accordance with user's intended use uniquely.

It is another object of the present invention to provide a remote monitoring system capable of constructing a monitoring network through a variety of connection means such as a LAN, a public line, an ISDN line, a CATV, an xDLS, a PDC/PHS, an IMT-2000, a satellite line and etc. by utilizing the Internet.

It is a further object of the present invention to provide a remote monitoring system capable of reserving previous records by setting a monitoring camera and an image recording apparatus separately even if an intruder and the like damages the camera.

It is another object of the present invention to provide a remote monitoring system without having to set the recording apparatus by a user himself or herself and take a maintenance operational system so as to constantly operate.

It is a further object of the present invention to provide a remote monitoring system without having to regularly replace a tape as a recording medium by a user.

It is another object of the present invention to provide a remote monitoring system capable of ensuring high-reliability.

It is a further object of the present invention to provide a remote monitoring system allowing a user to reduce an initial investment and easily perform expansion or reduction of a scale in the future.

It is another object of the present invention to provide a remote monitoring system capable of starting without purchasing software or installing it even if a user desires to add a new service.

An image storage server according to the present invention is an image storage server (1) connected to the Internet (3), comprising: an accepting means for accepting setting of a utilization condition of a user utilizing the image storage server (1) from a user terminal (12, 13) connected to the Internet (3); a storing means (104) for storing the utilization condition of the user; a receiving means for receiving image information from an imaging device (4) connected to the Internet on the basis of the utilization condition; and an image providing means for providing to the user terminal the image information from the imaging device (4) on the basis of the utilization condition.

Furthermore, it may be configured to notify, on the basis of an alarm notification from the imaging device of the user, the alarm information to the user terminal.

In addition, it may be configured to charge the user on the basis of the utilization condition set by the user.

A utilizing method of an image storage server according to the present invention is a utilizing method of an image storage server which is connected to the Internet and provided with an accepting means for accepting setting of a utilization condition of the image storage server from a user terminal connected to the Internet, a storing means for storing the utilization condition of the user, a receiving means for receiving image information from an imaging device connected to the Internet on the basis of the utilization condition, and an image providing means for providing to the user terminal the image information from the imaging device on the basis of the utilization condition, comprising steps of: connecting the image storage server to the Internet to allow a user who desires storage of the image information imaged by the imaging device of the user to make the user set a storage condition of the image information from the imaging device with respect to the image storage server to make the image storage server store the image information from the imaging device of the user on the basis of the storage condition, thereby to construct an image storage system which the user stores image by utilizing the image storage server connected to the Internet.

A remote monitoring system according to the present invention comprises: an image storage server connected to the Internet for storing image information; an imaging device of a user for imaging an image and transmitting the image information to the image storage server via the Internet; and a user terminal for receiving the image information from the imaging device by accessing the image storage server via the Internet, wherein the user registers with respect to the image storage server a storage condition of the image information from the imaging device of the user as a utilization condition of the image storage server, and the image storage server which stores the image information of the imaging device of the user on the basis of the utilization condition as registered and provides the image information of the user to the user terminal on the basis of the utilization condition of the user when there is a utilization request of the image information from the user terminal.

Furthermore, an imaging device according to the present invention comprises: a transmitting means for transmitting an imaged image information to an image storage server; a determining means for determining whether or not an event to be notified with an alarm occurs to the imaged image information; and a notifying means for notifying, when the event to be notified with an alarm occurs, occurrence to the image storage server.

In the image storage server according to the present invention, simply by preparing the monitoring camera, connecting the monitoring camera to the Internet, and setting the utilization condition of the monitoring camera to the image storage server, it is possible for the user to construct a remote monitoring system. Furthermore, at a time of detecting an intruder, it is possible to notify it to the image storage server and the user. In addition, it is possible to perform reasonable charge without needless charge by performing charge on the basis of the utilization condition of the user.

According to the present invention, simply by preparing the monitoring camera, connecting the camera to the Internet and registering the utilization condition to the image storage server by the user who desires to utilize the remote monitoring system, it becomes possible to construct the remote monitoring system desired by the user.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is an illustrative view showing a system configuration of a remote monitoring system of an embodiment of the present invention;
Figure 2 is a block diagram showing an image storage server 1 of the remote monitoring system of the embodiment;
Figure 3 is a block diagram showing a monitoring camera 4 of the remote monitoring system of the embodiment;
Figure 4 is a flowchart showing a newly registration process of the remote monitoring system of this embodiment;
Figure 5 is a flowchart showing a registration/renewal process of service information of the remote monitoring system of the embodiment;
Figure 6 is an illustrative view showing an example of a registration/renewal screen of the service information of the remote monitoring system of the embodiment;
Figure 7 is an illustrative view showing a configuration of a user data table 102; and
Figure 8 is a flowchart showing a service providing process of the remote monitoring system of the present invention.

### BEST MODE FOR PRACTICING THE INVENTION

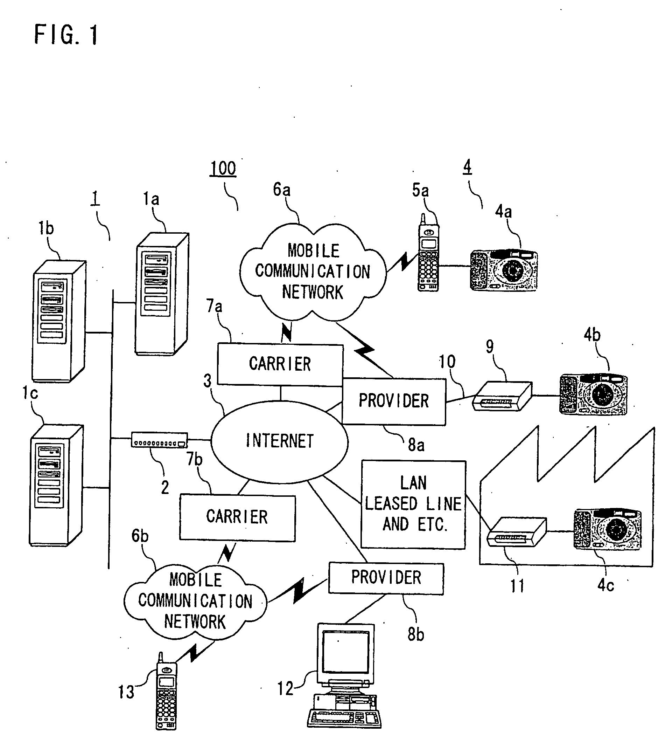

Figure 1 shows a whole system configuration of a remote monitoring system 100 utilizing an image storage server 1 according to an embodiment of the present invention. In Figure 1, reference numerals 1, 1a, 1b, 1c ··· denote image storage servers which has a large storage capacity for storing a large number of images. In Figure 1, there are, but not necessarily, a plurality of image storage servers to be connected, and the number of the image storage servers may be adequate depending on the number of users and contents of services. Alternatively, it is appropriate that the image storage servers are configured to separately set in, but not one place, respective places and be connected to the Internet 3.

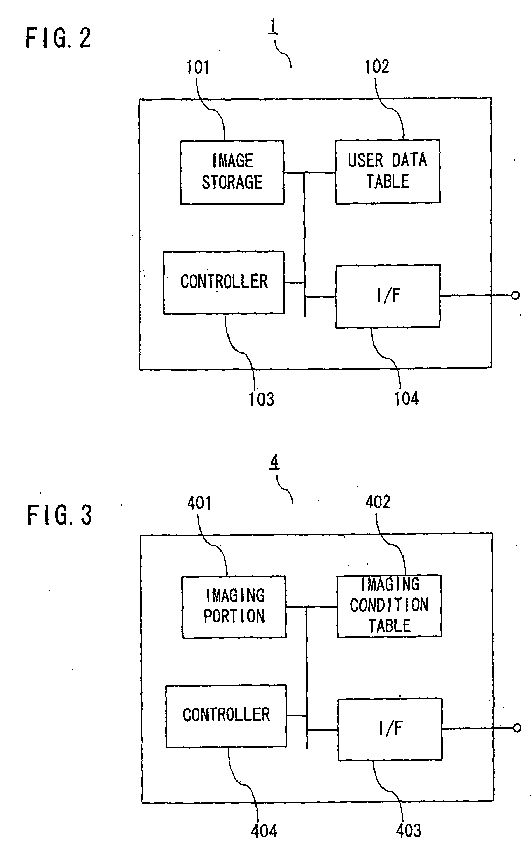

Figure 2 is a block diagram for the image storage server 1. A reference numeral 101 denotes an image storage portion for recording image data sent from a monitoring camera 4, a reference numeral 102 denotes a user data table for storing a condition of monitoring service for each user, a reference numeral 103 denotes a control portion for performing image storage service to the user on the basis of contents stored in the user data table, and a reference numeral 104 denotes an I/F.

In Figure 1, a reference numeral 2 denotes a router for connecting the image storage server 1 to the Internet 3.

Reference numerals 4, 4a, 4b, 4c ··· denote monitoring cameras (a combination of a camera and a computer may be available) of the user, and each of these monitoring cameras 4a, 4b, 4c outputs an imaged or photographed image via the Internet 3 to the image storage server 1 according to a described-later method.

Figure 3 is a block diagram of the monitoring camera. In Figure 3, a reference numeral 401 denotes an imaging portion. The imaging portion can be configured separately or detachably as necessary. A reference numeral 402 denotes an imaging condition table for setting an imaging condition by the imaging portion. The imaging condition table 402 is registered with information such as an IP (Internet protocol) address, connection information to the Internet 3 (a telephone number of the Internet provider 8a), a connection condition to the image storage server 3 (regular connection, periodical or restricted-time (period) connection and etc.), a protocol utilized at a time of connection, a transmission rate of the image data (e.g., 1 fps, 1 frame/3 seconds, or the like), a compression ratio/picture size, an alarm notification condition and etc. Although each condition set in the imaging condition table may be directly set to the monitoring camera 4 by the user, structure that a utilization condition registered in the user database 102 of the image storage server 1 is downloaded to the monitoring camera 4 from the user terminal 12 or 13 by the image storage server 1 in a later-mentioned manner. A configuration of downloading the imaging condition realizes conformity between registered contents in the user database 102 of the image storage server 1 and registered contents on the imaging condition table of the monitoring camera 4.

In a case a regular connection between the image storage server 1 and the monitoring camera 4 is made, the image storage server 1 can fetch an image of the monitoring camera 4 even if the imaging condition is not registered on the monitoring camera 4 side. In this case, it is appropriate that the image storage server 1 sends a transmission request of the image to the monitoring camera 4 on the basis of the registered utilization condition, and the monitoring camera 4 transmits the image to the image storage server 1 in response to the transmission request.

A reference numeral 403 denotes an I/F for performing a connection to the Internet 3.

A reference numeral 404 denotes a controller for controlling the transmission of the imaged image to the image storage server 1 on the basis of the registered contents in the imaging condition table 402. In a case an alarm notification request is set in the imaging condition table 402, the controller 404 transmits the alarm notification to the image storage server 1 on the basis of the condition as set. For example, when detecting an intruder during monitoring a room (detecting a change of the image by a motion detection function for detecting a change of an image), such the information is transmitted to the image storage server 1. It is possible to adopt structure that a program for detection is downloaded from the image storage server 1. Furthermore, the controller 404 supports a protocol dependent on a connection manner to the image storage server 1. That is, in a case of performing a dial-up connection via the public line or the ISDN (integrated services digital network) line, a PPP (point-to-point protocol) is supported. In addition, in a case of utilizing a PIAFS (PHS Internet Access Forum Standard) of the PHS (personal handy phone system), a PIAFS I/F and its driver are supported, and in a case of connecting to a LAN (local area network), an Ehernet I/F and its driver are supported. The above-described TCP/IP (transmission control protocol/Internet protocol), an UDP (user datagram protocol), an IP, an FTP (file transfer protocol), an RS-232C I/F and etc. may be supported.

It is also possible to adopt structure configured that the monitoring camera 4 is provided with interfaces for inputting information from various sensors (temperature, humidity, gas leakage, opening and closing of a door/window and etc.) so as to collect the information of the various sensors set in a building to be subjected to monitoring, and the information is sent to the image storage server 1. The image storage server 1 records the information of the various sensors transmitted from the monitoring camera 4, and notifies, when a registered default value is exceeded or a change is recognized on the basis of the utilization information by the user, the information to a computer 12 or cellular phone 13 of the user according to a method recorded in advance in the user data table 102. It is noted that as a method of notifying the information, message transmission to a specified e-mail address, notification by dialing and sound to a specified telephone number (including land number and a cellular phone number), notification to a center of a security company contracted with the user and etc. can be adopted, and which method is to be selected can be recorded in advance as the utilization information of the user of the image storage server 1.

A reference numeral 5a denotes a cellular phone of the user connected to a monitoring camera 4a. The cellular phone 5a connects the monitoring camera 4a to the image storage server 5 on the Internet 4 by utilizing Internet connecting service provided by communication service 7a via a mobile communication network 6a. Alternatively, the cellular phone 5a connects the monitoring camera 4a to the image storage server 5 on the Internet 3 by utilizing the Internet service provider 8a.

A reference numeral 9 denotes a modem connected to an ISDN line 10, and the image data output from the monitoring camera 4b is transmitted to the image storage server 1 on the Internet 3 from the modem 9 via the Internet service provider 8a.

A reference numeral 11 denotes a router connecting the monitoring camera 4c to the LAN or the leased line connected to the Internet 3.

A reference numeral 12 denotes a computer (View PC, user terminal) utilized when the user views and searches the images of the monitoring cameras 4a, 4b and 4c and changes the imaging condition. It is possible to connect lines from the above-described computer 12 to the image storage server 1 on the Internet 3 via an Internet provider 8b or directly connect lines to the monitoring cameras 4a, 4b and 4c.

A reference numeral 13 denotes a cellular phone (user terminal) of the user. It is possible for the user to connect the image storage server 1 on the Internet 3 from the cellular phone 13 via the mobile communication network 6b by utilizing the Internet connection service provided by the communication service 7b or to directly connect the cellular phone to the monitoring cameras 4a, 4b and 4c.

A utilization method of the remote monitoring system using the image storage server 1 will be described below.

A user who desires to use this system prepares the monitoring camera 4 (a combination of a camera and a computer may be available) for being connectable to the Internet 3 and the user terminal 12 and/or 13 for accessing the image storage server 1.

Then, the user accesses the image storage server 1 and opens a homepage of the remote monitoring system, and performs a registration of the user information at the homepage.

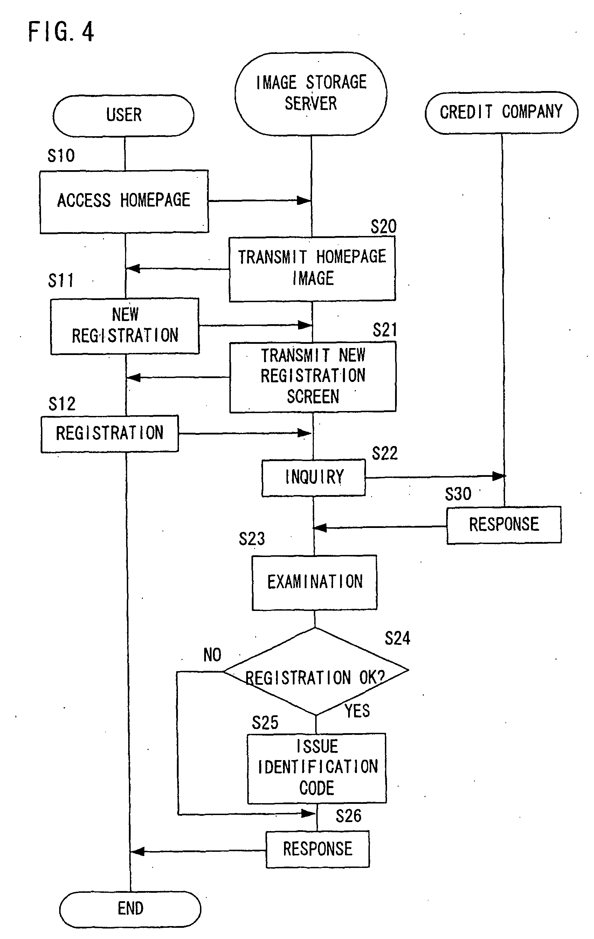

Figure 4 is a flowchart showing a procedure of the user registration, and the procedure of the user registration is described on the basis of Figure 4.

The user accesses the homepage of the remote monitoring system of the image storage server 1 from the cellular phone 13 or the computer 12 (step S10, hereinafter referred to as "S10"). Screen information of the accessed homepage is sent from the image storage server 1 to the user terminal 12 or 13 (S20). When the user selects a new registration from the displayed homepage (S11), a new registration screen is sent from the image storage server 1 (S21), and the new registration screen is displayed on the user terminal 12 or 13.

Then, if the user inputs a user name (or appellation), an address, a settlement method (credit number) and etc. and specifies a registration (S12), the user is inquired by a third-party such as a credit company or the like on the basis of the registered information on the image storage server side 1 (S 22), and it is examined whether or not the registration is accepted on the basis of a response or reply (S30) from the credit company (S23). Then, in a case the user registration is accepted (S24), an identification code is issued (S25) and sent the same to the user (S26). On the other hand, if the registration is not accepted (S24), a message indicative of impossibility of registration is sent (S26).

The user receiving the issue of the identification code can subsequently receive services by the remote monitoring system by accessing the image storage server 1 by use of the identification code.

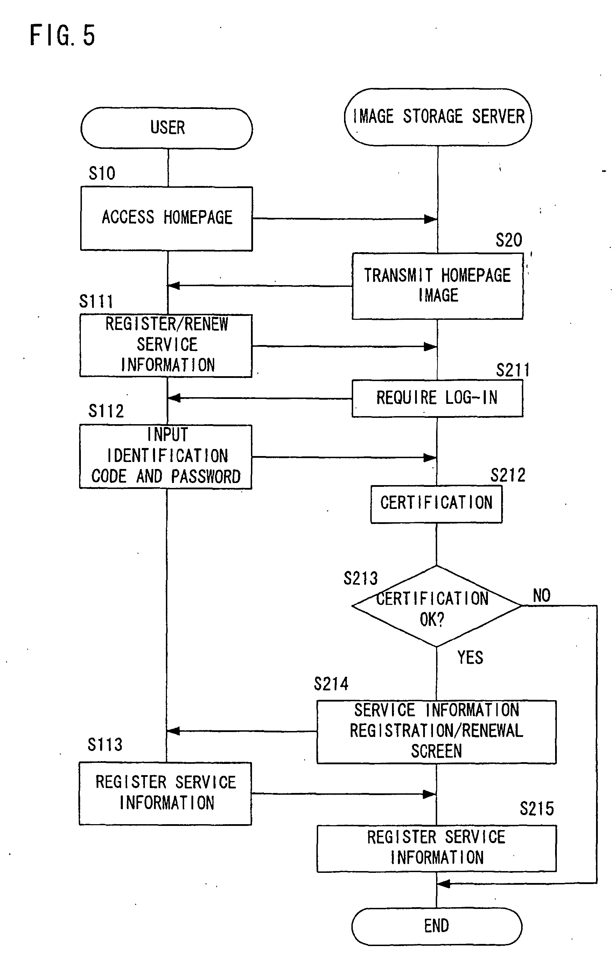

Next, the user registers a monitoring camera 4 to be utilized and a condition of service to be utilized. This registration procedure is described on the basis of a flowchart showing a registration procedure of a service condition by the user in Figure 5.

As in the case of the above-described new registration procedure, the user accesses the homepage of the image storage server (S10, S20) and selects registration /change of service information from the displayed screen (S111), whereby, a log-in is required from the image storage server 1 (S211). Then, the user inputs the identification code and a password (S112), the image storage server 1 starts a certification subsystem and certifies the user from the identification code and the password (S212). In a case the certification subsystem can specify the user registered in the image storage server 1 from the identification code and password as the input, i.e., if the certification is "OK", a registration/renewal screen of the service information is displayed on the user terminal 13 or 12 (S214). On the other hand, in a case the certification subsystem cannot specify the user registered in the image storage server 1 from the identification code and password as the input, a log-in denial or refusal is notified to the user terminal 13 or 12 and then, the process is ended.

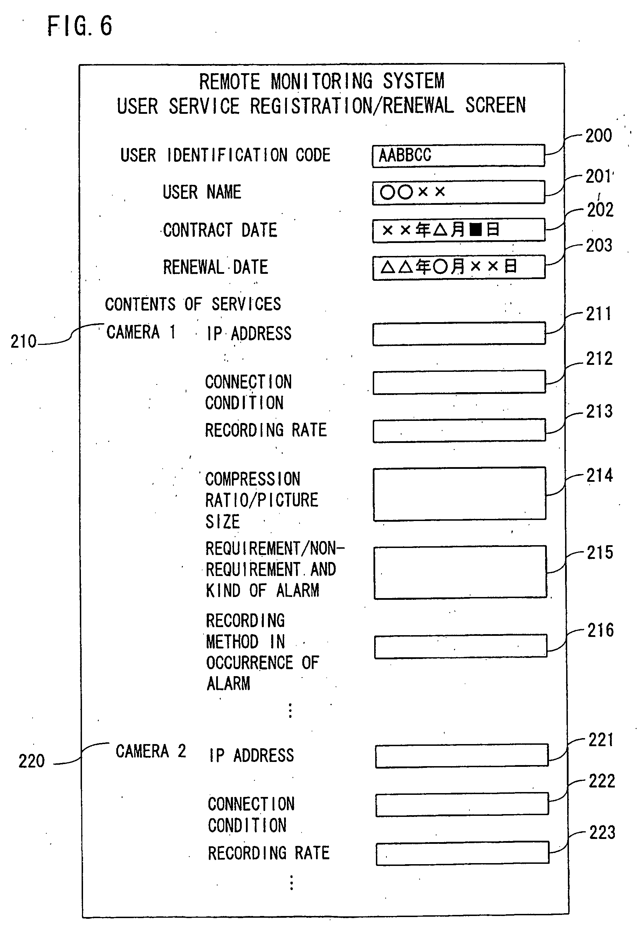

Figure 6 is a view showing a screen example of the registration/renewal screen of the service information displayed on the user terminal 12 or 13.

At the top, information indicative of a user identification code (ID) 200, a user name 201, a contract date (new registration date) 202, a last renewal date of the user service information 203 and etc. are displayed.

Below the middle, registration fields of the service contents for the user are displayed. Reference numerals 210, 220, ··· denote the registration fields of respective cameras. In a case there are a plurality of cameras registered by the user, a condition of each camera is registered in these fields.

Among the registration fields of the camera, reference numerals 211 and 221 denote registration fields for registering a number to identify the monitoring camera, where on the monitoring camera side, an IP address, a URL or a number to specify the IP address or the URL is filled.

Reference numerals 212 and 222 denote fields for setting connection conditions between the monitoring camera 4 and the image storage server 1. As the connection condition, whether the monitoring camera 4 and the image storage server 1 are always connected, or connected periodically or during the specified time period only can be set. Alternatively, it is possible to set whether the image is transmitted to the image storage server 1 by using the e-mail. It is also possible to specify a protocol (TCP/IP, UDP, IP, FTP and etc.) utilized at a time of connection. Herein, if recording the periodic connection or the connection only during the specified time period is selected, a time, period, date and etc. are also set.

Reference numerals 213 and 223 denote fields for setting recording rates where 1fps, 1 frame/3 seconds, or the like can be set.

A reference numeral 214 denotes a field for setting a compression ratio/picture size or a storage capacity (hours of or days of it and etc.). A reference numeral 215 denotes a field for performing a condition setting such as require/non-require of performing notification service at a time of occurrence of an alarm event when a predetermined state such as intrusion and etc., a notification destination (telephone number, e-mail address and etc.), and a predetermined state. A reference numeral 216 denotes a field for registering an operation condition (record at a high-rate during a predetermined time period only) at a time of occurrence of the alarm event.

Thus, the user can set the utilization condition of the image storage server 1 in various ways in accordance with the intended use. For example, for a general monitoring use, it is possible to select a regular connection as a connection method while for a entertainment use such as live broadcast of a show or an introduction of sightseeing areas, it is possible to record periodically or only during a predetermined time period by specifying a necessary time zone.

After inputting the registration information, when the user executes the registration (S 113), the contents described on the registration screen is registered in the user data table 102 of the image storage server 1.

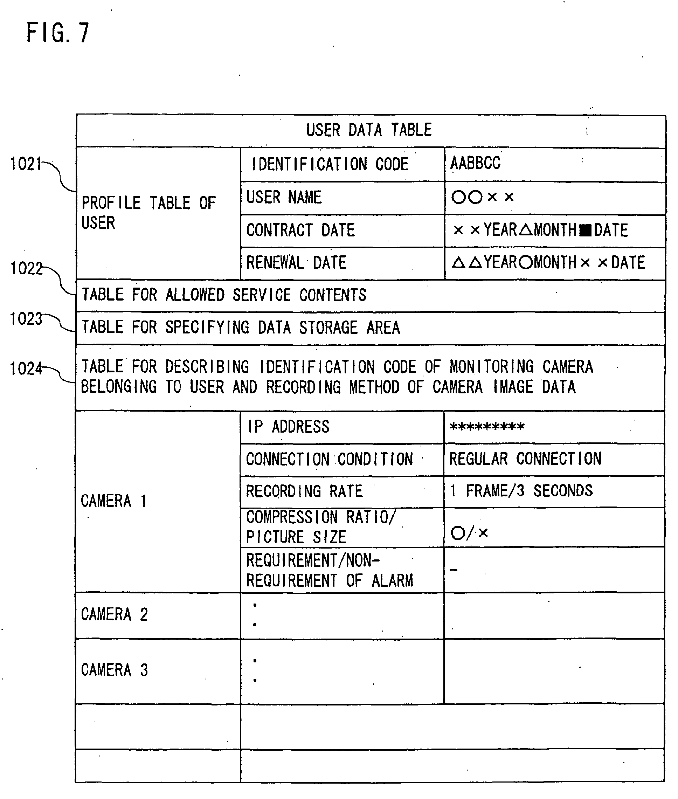

Figure 7 is a view showing registration contents of the user data table 102.

In Figure 7, a reference numeral 1021 denotes a profile table of the user, and a reference numeral 1022 denotes a table for describing an allowed or accepted service contents. A reference numeral 1023 denotes a table for specifying a data storage area, and a reference numeral 1024 denotes a table for describing a number (IP address, URL and etc.) to identify a monitoring camera belonging to the user among the monitoring cameras 4 connected to the network and a recording method of camera image data.

It is also possible to download the registered contents to the imaging condition table 402 of the monitoring camera 4. Furthermore, it is possible to construct that the registration of the service information of the user is performed through upload from the monitoring camera 4 to the image storage server 1 on the basis of the registered contents of the imaging condition table 402 of the monitoring camera 4.

Furthermore, a charge to the user can be performed on the basis of the utilization condition registered on the user data table 102. Thus, since not a charge for unwanted service the user does not require but a charge for only a utilization condition desired by the user is made, it is possible to perform a reasonable charge.

The image storage server 1 stores the image data imaged by the monitoring camera 4 on the basis of the registered contents of the user data table 102. Storage of the image data is performed by first connecting the monitoring camera 4 and the image storage server 1 to each other, and then, transmitting the image data from the monitoring camera 4 on the basis of the set condition, whereby the image storage server 1 stores the image data in the image storage portion 101 on the basis of the registered condition.

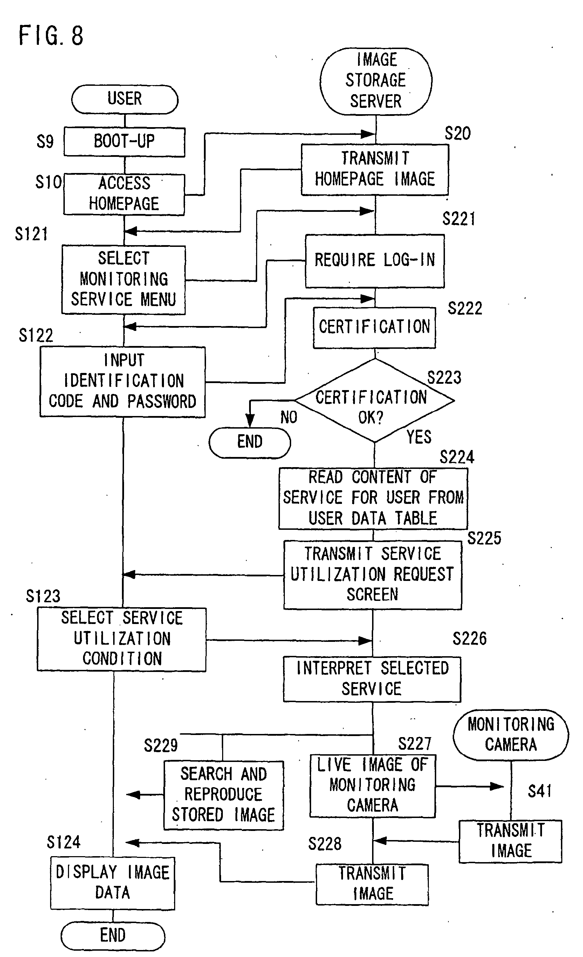

A utilization procedure at a time of receiving services such as reproducing, searching, and editing of the images of the monitoring camera 4 by accessing the image storage server 1 by the user is described on the basis of a flowchart of Figure 8 showing service utilization process.

The user boots-up the cellular phone 13 or the computer 12 (S9) and then accesses the homepage of the remote monitoring system on the image storage server 1 (S10). The homepage of the remote monitoring system is transmitted from the image storage server 1 to the user terminal 13 or 12 (S20).

When the user selects utilization of the monitoring service (S121), a log-in request is performed by the image storage server 1 (S221). Then, when the user inputs the identification code and the password (S122), the image storage server 1 activates the certification subsystem so as to certify the user from the identification code and the password (S222). It is noted that a method of user certification is not limited to the above-described manner and may be configured to use an ID issued from a certificate department.

In a case the certification subsystem can specify the user registered in the image storage server 1 from the input user identification code and password, i.e., the certification is OK, the service contents of the user registered in the user data table 102 is read (S224), and a service utilization screen displayed with the service contents allowed for the user is displayed on the user terminal (S225).

On the other hand, in a case the certification subsystem cannot specify the user registered in the image storage server 1 from the input user identification code and password, a log-in denial is notified to the user terminal 13 or 12, and then, the process is ended.

The user selects a desired service from the displayed service utilization screen (S123). If the image storage server 1 interprets the selected service (S226) and determines that a live image of the monitoring camera 4 is selected, it is notified that the live image is sent to the monitoring camera which is selected and belonging to the user (S227). The monitoring camera 4 transmits the live image to the image storage server 1 in response to the request from the image storage server 1 (S41), and the image storage server 1 transmits the image to the user terminal 13 or 12 (S228).

On the other hand, in a case a reproduction/search process of the image data recorded on the image storage server 1 is selected, reproduced image data, a search result or image data of the search result is transmitted to the user terminal 13 or 12 (S229) with referring to an area to which the image data of the user monitoring camera 4 (S229) is to be stored from the user data table 102.

The user terminal 13 or 12 receives the image data sent from the image storage server 1 and performs an operation such as displaying (S124). The image storage server 1 and the user terminal 13 or 12 repeat the processing if there is data to be processed subsequently. Furthermore, the image storage server 1, if there is no data to be subjected to service, notifies it to the user terminal 13 or 12, and then waits a next request from the user terminal 13 or 12.

The user, if knowing the completion of the service selected in the S123, selects whether to require another service subsequently or to log-out from the image storage server 1. The user terminal 13 or 12, if the user requires another service subsequently, returns to the step S123 again. The image storage server 1, if another service request from the user terminal 13 or 12 is subsequently present, returns to the step S226.

The user terminal 13 or 12, if the user selects the log-out from the image storage server 1, notifies it to the image storage server 1 and then log-out so as to be ended. The image storage server 1, if receiving notification of the log-out from the user terminal 13 or 12, releases the connection with the user terminal.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An image storage server connected to an Internet, comprising:
an accepting means for accepting setting of a utilization condition of a user who utilizes the image storage server from a user terminal connected to the Internet;
a storing means for storing the utilization condition of the user;
a receiving means for receiving image information from an imaging device connected to the Internet on the basis of the utilization condition; and
an image providing means for providing to the user terminal the image information from the imaging device on the basis of the utilization condition.

2. An image storage server according to claim 1, wherein the information is notified to said user terminal on the basis of an alarm notification from the imaging device of said user.

3. An image storage server according to claim 1 or 2, wherein a charge is performed to the user on the basis of the utilization condition set by said user.

4. A utilizing method of an image storage server connected to the Internet and provided with an accepting means for accepting setting of a utilization condition of said image storage server from a user terminal connected to an Internet, a storing means for storing the utilization condition of the user, a receiving means for receiving image information from an imaging device connected to the Internet on the basis of the utilization condition, and an image providing means for providing to the user terminal the image information from the imaging device on the basis of the utilization condition, comprising steps of:
(a) connecting the image storage server to the Internet,
(b) allowing a user who desires storage of the image information imaged by the imaging device of the user to access the image storage server,
(c) making the user set an storage condition of the image information of the imaging device to the image storage server, and
(d) making the image storage server store the image information from the imaging device of the user on the basis of the storage condition, whereby an image storage system can be constructed by utilizing the image storage server connected to the Internet.

5. A method according to claim 4, further comprising a step of (e) charging the user with a fee of utilization of the image storage server.

6. A remote monitoring system including an image storage server connected to an Internet for storing image information; an imaging device of a user of the image storage server for imaging image information and transmitting imaged image information to the image storage server via the Internet; and a user terminal for receiving the image information from the imaging device by accessing the image storage server via the Internet, said image storage server comprising:
a registering means for registering an storage condition of the image information of the imaging device of the user as a utilization condition of the image storage server;
a storing means for storing the image information of the imaging device of the user on the basis of the registered utilization condition; and
an image information providing means for providing the image information of the user to the user terminal on the basis of the utilization condition of the user when there is a utilization request of the image information from the user terminal.

7. A remote monitoring system according to claim 6, further comprising a charging means for charging the user with a fee of utilization of the image storage server.

8. An imaging device, comprising:
a transmitting means for transmitting imaged image information to an image storage server;
a determining means for determining whether or not an event to be notified with an alarm occurs to the imaged image information; and
a notifying means for notifying, when the event to be notified with an alarm occurs, the occurrence to the image storage server.

9. An image storage server connected to an Internet, comprising:
a controller for accepting setting of a utilization condition of a user utilizing the image storage server from a user terminal connected to the Internet;
a user data table for storing the utilization condition of the user;
an interface for receiving image information from an imaging device connected to the Internet on the basis of the utilization condition; and
an image storage for storing the image information, wherein
the controller provides to the user terminal via the interface the image information from the imaging device on the basis of the utilization condition.

10. A method of utilizing an image storage server provided with a controller connected to an Internet for accepting setting of a utilization condition of a user utilizing the image storage server from a user terminal connected to the Internet; a user data table for storing the utilization condition of the user; an interface for receiving image information from an imaging device connected to the Internet on the basis of the utilization condition; and an image storage for accumulating the image information, wherein said controller provides to the user terminal via the interface the image information from the imaging device on the basis of the utilization condition, comprising steps of:
(a) connecting the image storage server to the Internet,
(b) allowing the user desiring storage of the image information imaged by the imaging device of the user to access the image storage server,
(c) making the user set an storage condition of the image information of the imaging device to the image storage server, and
(d) making the image storage server store the image information from the imaging device of the user on the basis of the storage condition, whereby an image storage system can be constructed by utilizing the image storage server connected to the Internet.

11. A remote monitoring system including an image storage server connected to an Internet for storing image information; an imaging device of a user of the image storage server for imaging the image information and transmitting to the image storage server the imaged image information via the Internet; and a user terminal for receiving the image information of the imaging device by accessing the image storage server via the Internet, said image storage server comprising:
a user data table for registering an storage condition of the image information of the imaging device of the user as a utilization condition of the image storage server;
an image storage for storing the image information of the imaging device of the user on the basis of the registered utilization condition; and
a controller for providing the image information of the user to the user terminal on the basis of the utilization condition of the user when there is a utilization request of the image information from the the user terminal.
